(19)

Europäisches Patentamt

European Patent Office

Office européen des brevets

(11) **EP 4 528 310 A1**

(12) **EUROPÄISCHE PATENTANMELDUNG**

(43) Veröffentlichungstag:
**26.03.2025  Patentblatt 2025/13**

(21) Anmeldenummer: 23198530.0

(22) Anmeldetag: **20.09.2023**

(51) Internationale Patentklassifikation (IPC):
*G01S 5/02* *(2010.01)*

(52) Gemeinsame Patentklassifikation (CPC):
**G01S 5/0263**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Ramirez, Alejandro**
**80797 München (DE)**

• **Herty, Michael**
**52074 Aachen (DE)**
• **Schindhelm, Corina Kim**
**82194 Gröbenzell (DE)**
• **Blankenbach, Jörg**
**52379 Langerwehe (DE)**
• **Grottke, Jan**
**52062 Aachen (DE)**
• **Laska, Marius**
**50733 Köln (DE)**

(74) Vertreter: **Siemens Patent Attorneys**
**Postfach 22 16 34**
**80506 München (DE)**

(54) **VERFAHREN ZUR ORTUNG EINES OBJEKTS, ORTUNGSSYSTEM UND STEUERUNGSPROGRAMM ZUM BETRIEB EINES ORTUNGSSYSTEMS**

(57)      Zur Ortung eines Objekts wird ein erstes Lokalisierungsverfahren (6) zur Ermittlung erster Positionsdaten ($b_{UWB}$) angewendet. Mittels eines zweiten Lokalisierungsverfahrens (7) werden zweite Positionsdaten ($b_{BLE}$) ermittelt. Durch Kombination (8) der ersten und zweiten Positionsdaten wird eine Position ($b_{UWB+BLE}$) des Objekts ermittelt. Das zweite Lokalisierungsverfahren weist im Vergleich zum ersten Lokalisierungsverfahren eine unterschiedliche Varianz in Bezug auf die Position des Objekts auf. Die ersten und zweiten Positionsdaten werden abhängig von der Varianz ($\sigma_1^2$, $\sigma_2^2$) des ersten und zweiten Lokalisierungsverfahrens zur Ermittlung der Position des Objekts gewichtet.

FIG 2

EP 4 528 310 A1

## Beschreibung

Die vorliegende Erfindung betrifft ein Verfahren zur Ortung eines Objekts, ein Ortungssystem zur Durchführung des Verfahrens und ein Steuerungsprogramm zum Betrieb des Ortungssystems.

Ortungssysteme können auf Nahbereichsfunkkommunikation basieren, insbesondere auf Ultrabreitband-Technologie (UWB - ultra-wideband), Bluetooth Low Energy (BLE) oder RFID-Tags (radio-frequency identification), die beispielsweise zur Identifizierung oder Ortung von Gegenständen an diesen jeweils angebracht werden. Insbesondere RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektromagnetischen Wechselfeldes ein Anfragesignal aus. Einerseits kann dieses elektro-magnetische Wechselfeld zur Energieversorgung insbesondere passiv betriebener RFID-Tags dienen, die keine eigene Energiequelle aufweisen. Andererseits kann das elektro-magnetische Wechselfeld durch RFID-Tags zur Übermittlung eines Antwortsignals moduliert werden, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

EP 3 290 948 B1 betrifft ein Positionserfassungssystem mit einem Positionserfassungssensor, der einen ersten und einen zweiten Funk-Transponder umfasst, die jeweils eine mit einer Antenne verbundene Sende- und Empfangseinheit und eine Speichereinheit zur persistenten Datenspeicherung aufweisen. Der erste Funk-Transponder weist eine Energieversorgungsquelle auf und ist wahlweise in einen Ruhezustand mit reduziertem Energieverbrauch und in einen aktiven Betriebszustand mit vollständigem Funktionsumfang versetzbar. Im aktiven Betriebszustand erfolgt ein Aufbau zumindest einer Funk-Verbindung zur Positionserfassung zu zumindest einem ersten Funk-Transponder-Lesegerät. Der induktiv durch ein Funk-Transponder-Lesegerät mit Energie versorgbare zweiten Funk-Transponder ist dazu ausgestaltet und eingerichtet, bei Eintritt in einen Erfassungsbereich eines zweiten Funk-Transponder-Lesegerätes den ersten Funk-Transponder aus dem Ruhezustand in den aktiven Betriebszustand zu versetzen oder über das zweite Funk-Transponder-Lesegerät eine dem zweiten Funk-Transponder zugeordnete Positionsinformation an einen Server des Positionserfassungssystems zu übermitteln.

In EP 3 338 108 A1 ist ein Verfahren zur Ermittlung einer Innenraum-Position eines mobilen Objekts beschrieben, bei dem ein erstes Lokalisierungsverfahren zur Ermittlung erster Positionsdaten angewendet wird. Zusätzlich ein zweites Lokalisierungsverfahren zur Ermittlung zweiter Positionsdaten angewendet. Durch Kombination der ersten Positionsdaten und der zweiten Positionsdaten wird eine Position des mobilen Objekts abgeleitet. Das erste Lokalisierungsverfahren weist beispielsweise eine hohe Genauigkeit für eine vorgegebene erste Zeitspanne auf, während das zweite Lokalisierungsverfahren eine hohe Genauigkeit für eine zweite Zeitspanne bietet. Dabei kann die zweite Zeitspanne kürzer als die erste Zeitspanne sein. Zusätzlich oder alternativ kann eine Kalibrierung des zweiten Lokalisierungsverfahrens unter Verwendung der ersten Positionsdaten aus dem ersten Lokalisierungsverfahren durchgeführt werden.

Aus US 2013/342391 A1 ist ein hybrides Lokalisierungsverfahren bekannt, bei dem für ein zu ortendes Gerät erste Positionsdaten zu einem vorgegebenen Zeitpunkt basierend auf einer 3D-Karte einer Umgebung ermittelt werden, in der sich das zu ortende Gerät befindet. Außerdem werden zum vorgegebenen Zeitpunkt, beispielsweise anhand eines Satelliten-Ortungssystems bzw. anhand eines Inertialsensorsystems, zweite Positionsdaten für das zu ortende Gerät ermittelt. Basierend auf den ersten und zweiten Positionsdaten wird eine Position des zu ortenden Geräts zum vorgegebenen Zeitpunkt ermittelt.

Traditionelle Lokalisierungsverfahren basieren überwiegend nur auf nur einer einzigen Ortungstechnologie, beispielsweise GNSS (global navigation satellite system), während modernere Lösungen mehrere Ortungstechnologien integrieren. Jedoch wird auch bei diesen moderneren Lösungen nicht mehr als eine Ortungstechnologie gleichzeitig verwendet, sondern es wird nur die Ortungstechnologie zur Positionsermittlung ausgewählt, die jeweils zu einem gegebenen Zeitpunkt unter den zur Verfügung stehenden Ortungstechnologien ein Maximum an räumlicher Genauigkeit bietet. Nur bei Ausfall der ausgewählten Ortungstechnologie oder bei fehlerhaften bzw. unzuverlässigen Ortungssignalen erfolgt eine Umstellung auf eine andere verfügbare Ortungstechnologie. Eine Anwendung der verfügbaren Ortungstechnologien erfolgt somit sequentiell und nicht parallel. Dies gilt auch für bekannte Ortungslösungen, die integrierte Inertial-Messeinheiten (IMU - inertial measurement units) umfassen, mittels derer insbesondere bei Verbindungsabbruch zu Ortungssatelliten oder- basisstationen eine nach Verbindungsabbruch zurückgelegte Strecke ermittelt werden kann ("dead reckoning").

In wissenschaftlichen Veröffentlichungen werden Ansätze zur Sensordaten-Fusion mittels maschinellen Lernens bzw. mittels Kalman-Filter oder neuronaler Netze diskutiert. Derartige Ansätze erfordern bisher eine verhältnismäßig aufwendige Implementierung und insbesondere eine hohe Rechenleistung involvierter Hardware-Komponenten.

Der vorliegenden Erfindung liegt daher die Aufgabe zugrunde, ein Verfahren zur genauen und aufwandsarmen Ortung eines Objekts mittels redundanter Lokalisierungsverfahren zu schaffen, das eine effiziente Nutzung zur Verfügung stehender Positionsdaten aus unterschiedlichen Quellen ermöglicht, sowie zur Durchführung des Verfahrens geeignete Mittel bzw. Implementierungen anzugeben.

Diese Aufgabe wird erfindungsgemäß durch ein Verfahren mit den in Anspruch 1 angegebenen Merkmalen, durch ein Ortungssystem mit den in Anspruch 14 angegebenen Merkmalen und durch ein Steuerungsprogramm mit den in Anspruch 15 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Ortung eines Objekts wird ein erstes Lokalisierungsverfahren zur Ermittlung erster Positionsdaten angewendet. Zusätzlich werden mittels eines zweiten Lokalisierungsverfahrens zweite Positionsdaten ermittelt. Im Vergleich zum ersten Lokalisierungsverfahren weist das zweite Lokalisierungsverfahren eine unterschiedliche Varianz in Bezug auf die Position des Objekts auf. Grundsätzlich können mehr als zwei Lokalisierungsverfahren angewendet werden. In diesem Fall werden weitere Positionsdaten ermittelt, die analog zu nachfolgenden Ausführungen gewichtet werden.

Das erste oder zweite Lokalisierungsverfahren kann insbesondere auf einer Auswertung von Signallaufzeiten zwischen einem dem zu ortenden Objekt zugeordneten Ultra-Breitband-Transponder und Referenzstationen eines Ultra-Breitband-Funkkommunikationssystems basieren. Demgegenüber kann das zweite bzw. erste Lokalisierungsverfahren beispielsweise auf einer Auswertung von zwischen einem dem zu ortenden Objekt zugeordneten Bluetooth Low Energy-Transponder und Referenzstationen eines Bluetooth Low Energy-Funkkommunikationssystems ermittelten Empfangsfeldstärke-Werten basieren.

Erfindungsgemäß wird durch Kombination der ersten und zweiten Positionsdaten eine Position des Objekts ermittelt. Dabei werden die ersten und zweiten Positionsdaten abhängig von der Varianz des ersten und zweiten Lokalisierungsverfahrens zur Ermittlung der Position des Objekts gewichtet.

Die vorliegende Erfindung bietet als Vorteil, dass Positionsdaten aus mehreren Lokalisierungsverfahren statistisch optimiert genutzt werden. Auf diese Weise kann eine Genauigkeit erzielt werden, die insbesondere im Vergleich zu einer Mittelwertbildung über die Positionsdaten aus den einzelnen Lokalisierungsverfahren signifikant höher ist. Darüber hinaus erfordert die vorliegende Erfindung nur eine sehr einfache Initialisierungsphase ohne detaillierte technische Informationen zu den verwendeten Lokalisierungsverfahren.

Die Varianz des zweiten Lokalisierungsverfahrens entspricht insbesondere einem Produkt aus der Varianz des ersten Lokalisierungsverfahrens und einem ersten Faktor. Dabei werden die zweiten Positionsdaten gegenüber den ersten Positionsdaten vorteilhafterweise mit einem vom ersten Faktor abhängigen zweiten Faktor gewichtet.

Vorzugsweise wird der zweite Faktor als Quotient aus dem ersten Faktor minus eins als Dividend und aus dem ersten Faktor plus 1 als Divisor ermittelt. Werden die ersten Positionsdaten entsprechend einer bevorzugten Ausgestaltung der vorliegenden Erfindung mit einem Faktor 1 gewichtet, so werden die zweiten Positionsdaten mit einem Faktor

$$\alpha = \frac{\gamma - 1}{\gamma + 1}$$

gewichtet. Dabei ist $\gamma$ der erste Faktor, während $\alpha$ der zweite Faktor ist. Für die Varianz des ersten Lokalisierungsverfahrens, die Varianz des zweiten Lokalisierungsverfahrens und den ersten Faktor gilt insbesondere

$$\sigma_2^2 = \gamma \cdot \sigma_1^2,$$

wobei $\sigma_1^2$ die Varianz des ersten Lokalisierungsverfahrens ist, während $\sigma_2^2$ die Varianz des zweiten Lokalisierungsverfahrens ist.

Vorteilhafterweise werden die Varianz des ersten Lokalisierungsverfahrens und die Varianz des zweiten Lokalisierungsverfahrens jeweils anhand einer Stichprobenvarianz der jeweiligen Positionsdaten ermittelt. Dabei werden die Stichprobenvarianzen vorzugsweise nur anhand der jeweiligen Positionsdaten des Objekts in unbewegtem Zustand ermittelt. Insbesondere können die Stichprobenvarianzen jeweils entsprechend

$$S_j^2 = \frac{\sum_{i=1}^{n}\left(b_{j.i} - \bar{b}_j\right)^2}{n - 1}, j = \{1, 2\}$$

berechnet werden. Dabei ist n eine Anzahl von Positionsdaten-Messwerten, während $b_{j.i}$ ein einzelner Positionsdaten-

Messwert und $b_j$ ein jeweiliger Positionsdaten-Mittelwert ist. Auf diese Weise können die ersten und zweiten Positionsdaten zuverlässig und ohne großen Aufwand abhängig von den ermittelten Stichprobenvarianzen des ersten und zweiten Lokalisierungsverfahrens zur Ermittlung der Position des Objekts gewichtet werden. Insbesondere kann damit die Varianz des ersten bzw. zweiten Lokalisierungsverfahrens ereignisabhängig bzw. zyklisch erneut ermittelt werden.

Entsprechend einer weiteren möglichen Ausgestaltung der vorliegenden Erfindung wird eine Position eines stationären Referenzobjekts mittels des ersten Lokalisierungsverfahrens ermittelt. Durch Abgleich zwischen einer tatsächlichen Position des Referenzobjekts und der Position des Referenzobjekts gemäß erstem Lokalisierungsverfahren kann die Varianz des ersten Lokalisierungsverfahrens ermittelt werden. Dementsprechend kann die Position des stationären Referenzobjekts mittels des zweiten Lokalisierungsverfahrens ermittelt werden. Dabei kann die Varianz des zweiten Lokalisierungsverfahrens durch Abgleich zwischen der tatsächlichen Position des Referenzobjekts und der Position des Referenzobjekts gemäß zweiten Lokalisierungsverfahren ermittelt werden.

Das erfindungsgemäße Ortungssystem ist zur Durchführung eines Verfahrens entsprechend vorangehenden Ausführungen vorgesehen und umfasst zumindest einen Transponder, der an einem zu ortenden Objekt anordenbar ist, mehrere jeweils an einer vorgegebenen Position anordenbare Referenzstationen zur Erfassung einer Position des Transponders sowie zumindest eine Rechnereinheit. Der Transponder und die Referenzstationen sind dafür ausgestaltet und eingerichtet, ein erstes Lokalisierungsverfahren zur Ermittlung erster Positionsdaten und ein zweites Lokalisierungsverfahren zur Ermittlung zweiter Positionsdaten durchzuführen. Dabei weist das zweite Lokalisierungsverfahren im Vergleich zum ersten Lokalisierungsverfahren eine unterschiedliche Varianz in Bezug auf die Position des Transponders auf.

Die Rechnereinheit des erfindungsgemäßen Ortungssystems ist dafür ausgestaltet und eingerichtet, durch Kombination der ersten und zweiten Positionsdaten die Position des Transponders zu ermitteln. Außerdem ist die Rechnereinheit dafür ausgestaltet und eingerichtet, die ersten und zweiten Positionsdaten abhängig von der Varianz des ersten und zweiten Lokalisierungsverfahrens zur Ermittlung der Position des Transponders zu gewichten.

Das erfindungsgemäße Steuerungsprogramm ist insbesondere zum Betrieb eines Ortungssystems entsprechend vorangehenden Ausführungen vorgesehen. Das Steuerungsprogramm ist in einen Arbeitsspeicher eines Rechnereinheit ladbar und weist zumindest einen Codeabschnitt auf, bei dessen Ausführung ein erstes Lokalisierungsverfahren zur Ermittlung erster Positionsdaten angewendet wird und mittels eines zweiten Lokalisierungsverfahrens zweite Positionsdaten ermittelt werden, wenn das Steuerungsprogramm in der Rechnereinheit abläuft. Dabei weist das zweite Lokalisierungsverfahren im Vergleich zum ersten Lokalisierungsverfahren eine unterschiedliche Varianz in Bezug auf eine Position eines zu ortenden Objekts auf. Außerdem wird bei Ausführung des Codeabschnitts durch Kombination der ersten und zweiten Positionsdaten die Position des Objekts ermittelt, und die ersten und zweiten Positionsdaten werden abhängig von der Varianz des ersten und zweiten Lokalisierungsverfahrens zur Ermittlung der Position des Objekts gewichtet.

Die vorliegende Erfindung wird nachfolgend an einem Ausführungsbeispiel anhand der Zeichnung näher erläutert. Es zeigt

Figur 1     ein Funkortungssystem für ein industrielles Automatisierungssystem mit mehreren Referenzstationen und Transpondern,

Figur 2     eine schematische Darstellung eines Ablaufs zur Ortung von Objekten mittels des Funkortungssystems gemäß Figur 1.

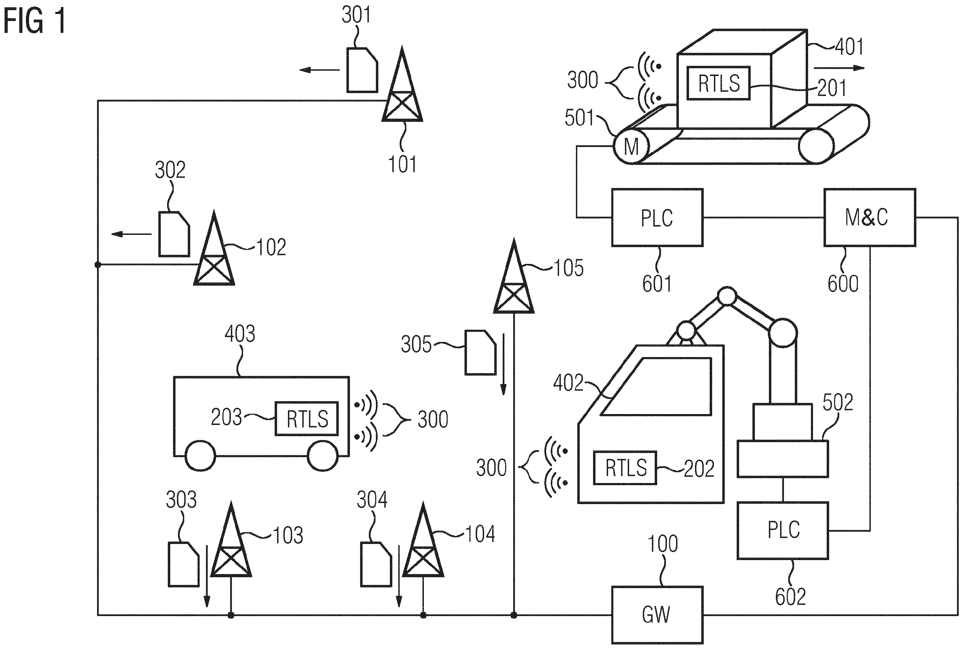

Das in Figur 1 dargestellte Funkortungssystem ist im vorliegenden Ausführungsbeispiel ein UWB- und BLE-basiertes Realtime Locating System (RTLS), das mehrere Referenzstationen 101-105 umfasst, die jeweils an vorgegebenen bzw. bekannten Positionen angeordnet sind. Mittels der Referenzstationen 101-105 können beispielsweise anhand von Funksignal-Laufzeiten, Funksignal-Empfangszeitdifferenzen bzw. Funksignal-Empfangsfeldstärke-Werten (RSSI) Positionen von Transpondern 201-203 erfasst werden, die jeweils an einem zu ortenden Objekt angebracht sind.

Wie in Figur 1 angedeutet sind die Referenzstationen 101-105 und die Transponder 201-203 dafür ausgestaltet und eingerichtet sind, ein erstes Lokalisierungsverfahren zur Ermittlung erster Positionsdaten und ein zweites Lokalisierungsverfahren zur Ermittlung zweiter Positionsdaten durchzuführen. Insbesondere die Transponder 201-203 umfassen hierzu zwei Ortungsmodule und senden mit diesen Funksignale 300 an die Referenzstationen 101-105.

Im vorliegenden Ausführungsbeispiel basiert das erste Lokalisierungsverfahren auf einer Auswertung von Signallaufzeiten zwischen einer dem jeweiligen zu ortenden Objekt zugeordneten UWB-Transpondereinheit und Referenzstationen eines UWB-Funkkommunikationssystems. Demgegenüber basiert das zweite Lokalisierungsverfahren auf einer Auswertung von Empfangsfeldstärke-Werten, insbesondere RSSI-Werten, die zwischen einer dem jeweiligen zu ortenden Objekt zugeordneten BLE-Transpondereinheit und Referenzstationen eines BLE-Funkkommunikationssystems ermittelt werden. Die Referenzstationen 101-105, jeweils für sich oder zumindest insgesamt, und die Transponder 201-203 jeweils für sich integrieren im vorliegenden Ausführungsbeispiel also UWB- und BLE-Ortungsfunktionen. Die Anwendung der vorliegenden Erfindung ist nicht auf diese Ortungstechnologien beschränkt. Vielmehr ist grundsätzlich jede beliebige Kombination anderer unterschiedlicher Ortungstechnologien, wie GNSS, 5G oder W-LAN, möglich.

Entsprechend dem in Figur 1 dargestellten Ausführungsbeispiel wird mittels eines ersten Transponders 201 ein Stückgut 401 auf einem Transportband überwacht, dessen Antrieb 501 durch eine erste speicherprogrammierbare Steuerung 601 gesteuert wird. Ein zweiter Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einer zentralen Überwachungs- und Steuerungseinheit 600 verbunden ist. Durch die Überwachungs- und Steuerungseinheit 600 werden u.a. die speicherprogrammierbaren Steuerungen 601, 602 und das Funkortungssystem projektiert bzw. überwacht. Das Funkortungssystem dient außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter Transponder 203 angeordnet.

Die Basisstationen 101-105 sind mit einer als Gateway 100 ausgestalteten Rechnereinheit des Funkortungssystems verbunden. Die Transponder 201-203 übermitteln vorzugsweise jeweils einen dem jeweils zu ortenden Objekt zugeordneten Objektidentifikator oder eine RTLS-Adresse des jeweiligen Transponders an die Basisstationen 101-105. Auf dieser Basis senden die Basisstationen 101-105 Datagramme 301-305, die insbesondere erfasste Signallaufzeitinformationen, Signalempfangszeitinformationen, Informationen über Signalempfangszeitdifferenzen bzw. Signalstärkemesswerte von empfangenen Transpondersignalen bzw. Objektidentifikatoren umfassen, zur Auswertung an das Gateway 100.

Das Gateway 100 des Funkortungssystems übermittelt im vorliegenden Ausführungsbeispiel wiederum ermittelte Positionen der Transponder 201-203 einschließlich der Objektidentifikatoren an die Überwachungs- und Steuerungseinheit 600. Vorteilhafterweise ist die Überwachungs- und Steuerungseinheit 600 dafür konfiguriert, eine graphische Darstellung der übermittelten Positionen der Transponder 201-203 aufzubereiten bzw. anhand der übermittelten Positionen der Transponder 201-203 einschließlich der Objektidentifikatoren den Transpondern 201-203 in der Überwachungs- und Steuerungseinheit 600 jeweils zugeordnete Ortsinformationen zu validieren.

Im Vergleich zum ersten Lokalisierungsverfahren weist das zweite Lokalisierungsverfahren eine unterschiedliche Varianz in Bezug auf die Position des jeweils zu ortenden Transponders 201-203 auf. Dabei entspricht die Varianz $\sigma_2^2$ des zweiten Lokalisierungsverfahrens einem Produkt aus der Varianz $\sigma_1^2$ des ersten Lokalisierungsverfahrens und einem ersten Faktor $\gamma$:

$$\sigma_2^2 = \gamma \cdot \sigma_1^2.$$

Die als Gateway 100 ausgestaltete Rechnereinheit des Funkortungssystems ist dafür ausgestaltet und eingerichtet, durch Kombination der ersten und zweiten Positionsdaten die Position des jeweiligen Transponders 201-203 zu ermitteln. Dabei gewichtet die Rechnereinheit die ersten und zweiten Positionsdaten zur Ermittlung der Position des jeweiligen Transponders 201-203 abhängig von der Varianz $\sigma_1^2$ des ersten Lokalisierungsverfahrens und der Varianz $\sigma_2^2$ des zweiten Lokalisierungsverfahrens. Im vorliegenden Ausführungsbeispiel werden die zweiten Positionsdaten gegenüber den ersten Positionsdaten mit einem vom ersten Faktor $\gamma$ abhängigen zweiten Faktor $\alpha$ gewichtet.

Für quantitative Fehlerschätzung bei einer Fusion von Positions- bzw. Sensordaten aus unterschiedlichen Quellen wird davon ausgegangen, dass Messfehler beim ersten Lokalisierungsverfahren und beim zweiten Lokalisierungsverfahren durch Gaußsches Rauschen charakterisiert werden können. Da außerdem davon ausgegangen wird, dass das erste Lokalisierungsverfahren und das zweite Lokalisierungsverfahren einem unterschiedlichen Rauschen $\xi_{UWB}$, $\xi_{BLE}$ unterliegen, ergeben sich die mittels der beiden Lokalisierungsverfahren ermittelten Positionen $b_{UWB}$, $b_{BLE}$ aus der tatsächlichen Position $b^*$ und dem jeweiligen additive Rauschen $\xi_{UWB}$, $\xi_{BLE}$:

$$b_{UWB} = b^* + \xi_{UWB},$$

$$b_{BLE} = b^* + \xi_{BLE}.$$

Darüber hinaus wird angenommen, dass das Rauschen $\xi_{UWB}$, $\xi_{BLE}$ als Zufallsvariable entsprechend einer Standardnormalverteilung $N(\mu_1, \sigma_1^2)$ bzw. $N(\mu_2, \sigma_2^2)$ verteilt ist, mit $\mu_1$, $\mu_2$ als Fehlermittelwert und $\sigma_1^2$, $\sigma_2^2$ als Varianz des ersten bzw. zweiten Lokalisierungsverfahrens. Bei der Fusion der Positions- bzw. Sensordaten wird durch obige Kombination der ersten und zweiten Positionsdaten, insbesondere durch Gewichtung der ersten Positionsdaten mit einem Faktor 1 und Gewichtung der zweiten Positionsdaten mit einem Faktor $\alpha$, eine neue Zufallsvariable $\xi_{UWB+BLE}$ erzeugt:

$$\xi_{\text{BLE+UWB}} = \frac{1}{2}\big(\xi_{UWB}(1+\alpha) + \xi_{BLE}(1-\alpha)\big).$$

Für $\alpha$=-1 bzw. $\alpha$=1 entspricht die neue Zufallsvariable $\xi_{UWB+BLE}$ exakt $\xi_{BLE}$ bzw. $\xi_{UWB}$. Da $\xi_{UWB}$, $\xi_{BLE}$ normalverteilt sind, ist $\xi_{UWB+BLE}$ entsprechend

$$N\left(\frac{1}{2}(\mu_1 + \mu_2) + \alpha\frac{\mu_1 - \mu_2}{2}, \quad \frac{1}{4}((1+\alpha)^2 \cdot \sigma_1^2 + (1-\alpha)^2 \cdot \sigma_2^2)\right)$$

verteilt.

Wenn der Fehlermittelwert $\mu_1$=-$\mu_2$ ist, kann ein neuer optimaler Fehlermittelwert für die Zufallsvariable $\xi_{UWB+BLE}$ mit $\alpha$=0 erzielt werden. In diesem Fall werden die ersten und zweiten Positionsdaten mit demselben Faktor gewichtet, und der Fehlermittelwert $\mu_{UWB+BLE}$ ist gleich 0.

Entsprechend obiger Annahme, beträgt die Varianz $\sigma_2^2$ des zweiten Lokalisierungsverfahrens ein reelles Vielfaches $\gamma$ der Varianz $\sigma_1^2$ des ersten Lokalisierungsverfahrens:

$$\sigma_2^2 = \gamma \cdot \sigma_1^2.$$

In diesem Fall kann die Varianz der Zufallsvariable $\xi_{UWB+BLE}$ durch den Faktor

$$\alpha = \frac{\gamma - 1}{\gamma + 1}$$

minimiert werden. Der obige zweite Faktor $\alpha$ wird also vorzugsweise als Quotient aus dem ersten Faktor $\gamma$ minus eins als Dividend und aus dem ersten Faktor $\gamma$ plus 1 als Divisor ermittelt. Bei dieser Wahl des Faktors $\alpha$ beträgt die Varianz der Zufallsvariable $\xi_{UWB+BLE}$

$$\frac{\gamma^2 + 1}{(\gamma + 1)^2}\sigma_1^2,$$

und der Fehlermittelwert der Zufallsvariable $\xi_{UWB+BLE}$ ist

$$\frac{1}{2}\mu_1\frac{2\gamma}{\gamma + 1} + \frac{1}{2}\mu_2\frac{2}{\gamma + 1}.$$

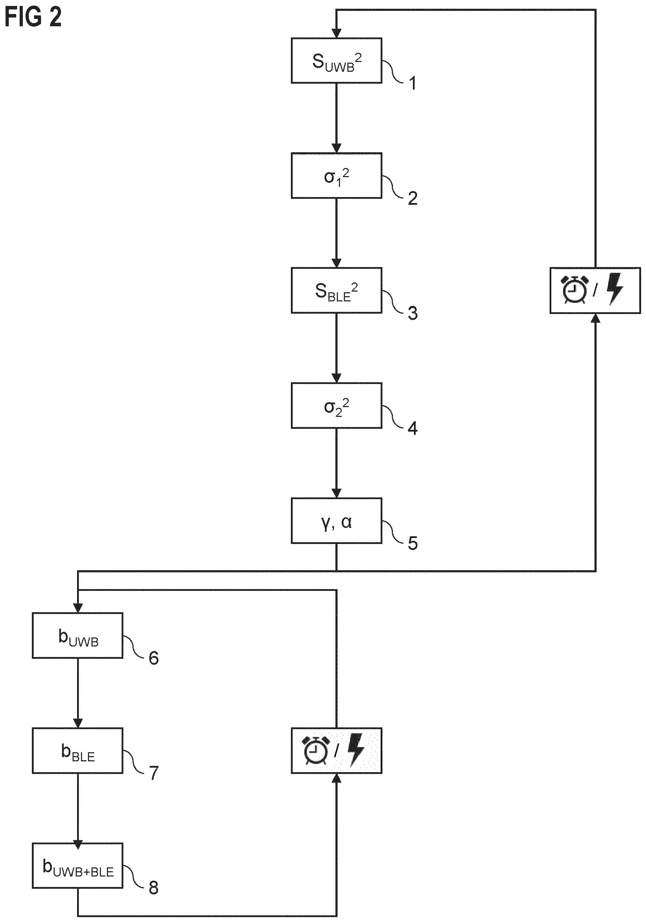

Entsprechend dem in Figur 2 schematisch dargestellten Ablauf zur Ortung von Objekten mittels des Funkortungssystems gemäß Figur 1 wird in einer Initialisierungsphase zunächst eine Stichprobenvarianz $S_{UWB}^2$ der mittels des ersten Lokalisierungsverfahrens erfassten Positionsdaten $b_{UWB}$ des jeweiligen Transponders 201-203 ermittelt (Schritt 1), und zwar in unbewegtem Zustand. Insbesondere wird die Stichprobenvarianz $S_{UWB}^2$ entsprechend

$$S_{UWB}^2 = \frac{\sum_{i=1}^{n}\big(b_{UWB.i} - \overline{b}_{UWB}\big)^2}{n - 1}$$

Berechnet. Dabei ist n eine Anzahl von Positionsdaten-Messwerten, während $b_{UWB.i}$ ein einzelner Positionsdaten-Messwert und $\overline{b}_{UWB}$ ein Positionsdaten-Mittelwert des ersten Lokalisierungsverfahrens ist. Anschließend wird in Schritt 2 die Varianz $\sigma_1^2$ des ersten Lokalisierungsverfahrens anhand der Stichprobenvarianz $S_{UWB}^2$ ermittelt.

In analoger Weise wird eine Stichprobenvarianz $S_{BLE}^2$ der mittels des zweiten Lokalisierungsverfahrens erfassten Positionsdaten $b_{BLE}$ des jeweiligen Transponders 201-203 ermittelt. Insbesondere wird die Stichprobenvarianz $S_{BLE}^2$ entsprechend

$$S_{BLE}^2 = \frac{\sum_{i=1}^{n}\left(b_{BLE.i} - \bar{b}_{BLE}\right)^2}{n - 1}$$

Berechnet. Dabei ist n eine Anzahl von Positionsdaten-Messwerten, während $b_{BLE.i}$ ein einzelner Positions-daten-Messwert und $\bar{b}_{BLE}$ ein Positionsdaten-Mittelwert des zweiten Lokalisierungsverfahrens ist. Danach wird die Varianz $\sigma_2^2$ des zweiten Lokalisierungsverfahrens anhand der Stichprobenvarianz $S_{BLE}^2$ ermittelt (Schritt 4).

Abhängig von den anhand der Stichprobenvarianzen $S_{UWB}^2$, $S_{BLE}^2$ ermittelten Varianzen $\sigma_1^2$, $\sigma_2^2$ des ersten und zweiten Lokalisierungsverfahrens werden in Schritt 5 der Faktor $\gamma$ und der Faktor $\alpha$ entsprechend obigen Ausführungen zur Gewichtung der ersten und zweiten Positionsdaten berechnet. Wie in Figur 2 durch Rücksprung von Schritt 5 auf Schritt 1 angedeutet, können die Varianz $\sigma_1^2$, $\sigma_2^2$ des ersten bzw. zweiten Lokalisierungsverfahrens sowie der Faktor $\alpha$ ereignisabhängig bzw. zyklisch anhand der Stichprobenvarianzen $S_{UWB}^2$, $S_{BLE}^2$ erneut ermittelt werden. Grundsätzlich können die Schritte 1-2 einerseits und die Schritte 3-4 andererseits parallelisiert werden.

Entsprechend einer alternativen Realisierungsvariante können die Varianzen $\sigma_1^2$, $\sigma_2^2$ durch Abgleich zwischen einer tatsächlichen Position $b_{REF}^*$ eines Referenzobjekts und einer Position $b_{REF,UWB}$, $b_{REF,BLE}$ des Referenzobjekts gemäß dem ersten bzw. zweiten Lokalisierungsverfahren ermittelt werden. Auch dies kann ereignisabhängig bzw. zyklisch wiederholt werden.

Nachfolgend können die ersten Positionsdaten mittels des erstes Lokalisierungsverfahrens ermittelt werden (Schritt 6). Zusätzlich, vorzugsweise im Wesentlichen zeitgleich zu Schritt 6, werden die zweiten Positionsdaten in Schritt 7 mittels des zweiten Lokalisierungsverfahrens ermittelt. Abschließend wird die Position des jeweiligen Transponders 201-203 in Schritt 8 wie oben beschrieben durch Kombination der ersten und zweiten Positionsdaten ermittelt. Die Schritte 6-8 können zyklisch oder ereignisabhängig wiederholt werden.

**Patentansprüche**

1. Verfahren zur Ortung eines Objekts, bei dem

   - ein erstes Lokalisierungsverfahren (6) zur Ermittlung erster Positionsdaten ($b_{UWB}$) angewendet wird,
   - mittels eines zweiten Lokalisierungsverfahrens (7) zweite Positionsdaten ($b_{BLE}$) ermittelt werden,
   - durch Kombination (8) der ersten und zweiten Positionsdaten eine Position ($b_{UWB+BLE}$) des Objekts (201-203) ermittelt wird,
   - das zweite Lokalisierungsverfahren im Vergleich zum ersten Lokalisierungsverfahren eine unterschiedliche Varianz in Bezug auf die Position des Objekts aufweist,
   - die ersten und zweiten Positionsdaten abhängig von der Varianz ($\sigma_1^2$, $\sigma_2^2$) des ersten und zweiten Lokalisierungsverfahrens zur Ermittlung der Position des Objekts gewichtet werden.

2. Verfahren nach Anspruch 1,
   bei dem die Varianz ($\sigma_2^2$) des zweiten Lokalisierungsverfahrens einem Produkt aus der Varianz ($\sigma_1^2$) des ersten Lokalisierungsverfahrens und einem ersten Faktor ($\gamma$) entspricht und bei dem die zweiten Positionsdaten gegenüber den ersten Positionsdaten mit einem vom ersten Faktor abhängigen zweiten Faktor ($\alpha$) gewichtet werden.

3. Verfahren nach Anspruch 2,
   bei dem der zweite Faktor ($\alpha$) als Quotient aus dem ersten Faktor ($\gamma$) minus eins als Dividend und aus dem ersten Faktor ($\gamma$) plus 1 als Divisor ermittelt wird.

4. Verfahren nach einem der Ansprüche 2 oder 3,
   bei dem die ersten Positionsdaten mit einem Faktor 1 gewichtet werden und bei dem die zweiten Positionsdaten mit einem Faktor

$$\alpha = \frac{\gamma - 1}{\gamma + 1}$$

gewichtet werden, wobei $\gamma$ der erste Faktor ist und $\alpha$ der zweite Faktor ist.

5. Verfahren nach Anspruch 4,
   bei dem für die Varianz ($\sigma_1^2$) des ersten Lokalisierungsverfahrens, die Varianz ($\sigma_2^2$) des zweiten Lokalisierungs-

verfahrens und den ersten Faktor ($\gamma$)

$$\sigma_2^2 = \gamma \cdot \sigma_1^2$$

gilt, wobei $\sigma_1^2$ die Varianz des ersten Lokalisierungsverfahrens ist und $\sigma_2^2$ die Varianz des zweiten Lokalisierungsverfahrens ist.

6. Verfahren nach einem der Ansprüche 1 bis 5,
bei dem die Varianz ($\sigma_1^2$) des ersten Lokalisierungsverfahrens (6) und die Varianz ($\sigma_2^2$) des zweiten Lokalisierungsverfahrens (7) jeweils anhand einer Stichprobenvarianz ($S_1^2$, $S_2^2$) der jeweiligen Positionsdaten ($b_{UWB}$, $b_{BLE}$) ermittelt werden.

7. Verfahren nach Anspruch 6,
bei dem die Stichprobenvarianzen ($S_1^2$, $S_2^2$) nur anhand der jeweiligen Positionsdaten ($b_{UWB}$, $b_{BLE}$) des Objekts in unbewegtem Zustand ermittelt werden.

8. Verfahren nach einem der Ansprüche 6 oder 7,
bei dem die Stichprobenvarianzen ($S_1^2$, $S_2^2$) jeweils entsprechend

$$S_j^2 = \frac{\sum_{i=1}^{n}\left(b_{j,i} - \bar{b}_j\right)^2}{n - 1}, j = \{1, 2\}$$

berechnet werden, wobei n eine Anzahl von Positionsdaten-Messwerten, $b_{j,i}$ ein einzelner Positionsdaten-Messwert und $\bar{b}_j$ ein jeweiliger Positionsdaten-Mittelwert ist.

9. Verfahren nach einem der Ansprüche 1 bis 5,
bei dem eine Position ($b_{REF,UWB}$) eines stationären Referenzobjekts mittels des ersten Lokalisierungsverfahrens ermittelt wird und bei dem die Varianz ($\sigma_1^2$) des ersten Lokalisierungsverfahrens durch Abgleich zwischen einer tatsächlichen Position des Referenzobjekts und der Position des Referenzobjekts gemäß erstem Lokalisierungsverfahren ermittelt wird.

10. Verfahren nach Anspruch 9,
bei dem die Position ($b_{REF,BLE}$) des stationären Referenzobjekts mittels des zweiten Lokalisierungsverfahrens ermittelt wird und bei dem die Varianz ($\sigma_2^2$) des zweiten Lokalisierungsverfahrens durch Abgleich zwischen der tatsächlichen Position des Referenzobjekts und der Position des Referenzobjekts gemäß zweiten Lokalisierungsverfahren ermittelt wird.

11. Verfahren nach einem der Ansprüche 6 bis 10,
bei dem die Varianz des ersten und/oder zweiten Lokalisierungsverfahrens ereignisabhängig und/oder zyklisch anhand des stationären Referenzobjekts erneut ermittelt werden/wird.

12. Verfahren nach einem der Ansprüche 1 bis 11,
bei dem das erste oder zweite Lokalisierungsverfahren auf einer Auswertung von Signallaufzeiten zwischen einem dem zu ortenden Objekt zugeordneten Ultra-Breitband-Transponder und Referenzstationen eines Ultra-Breitband-Funkkommunikationssystems basiert.

13. Verfahren nach einem der Ansprüche 1 bis 12,
bei dem das zweite oder erste Lokalisierungsverfahren auf einer Auswertung von zwischen einem dem zu ortenden Objekt zugeordneten Bluetooth Low Energy-Transponder und Referenzstationen eines Bluetooth Low Energy-Funkkommunikationssystems ermittelten Empfangsfeldstärke-Werten basiert.

14. Ortungssystem zur Durchführung eines Verfahrens nach einem der Ansprüche 1 bis 13 mit

    - zumindest einem Transponder (201-203), der an einem zu ortenden Objekt anordenbar ist,
    - mehreren jeweils an einer vorgegebenen Position anordenbaren Referenzstationen (101-105) zur Erfassung einer Position des Transponders,

- zumindest einer Rechnereinheit (100),
- wobei der Transponder und die Referenzstationen dafür ausgestaltet und eingerichtet sind, ein erstes Lokalisierungsverfahren (6) zur Ermittlung erster Positionsdaten ($b_{UWB}$) und ein zweites Lokalisierungsverfahren (7) zur Ermittlung zweiter Positionsdaten ($b_{BLE}$) durchzuführen, wobei das zweite Lokalisierungsverfahren im Vergleich zum ersten Lokalisierungsverfahren eine unterschiedliche Varianz in Bezug auf die Position des Transponders aufweist,
- wobei die Rechnereinheit dafür ausgestaltet und eingerichtet ist, durch Kombination (8) der ersten und zweiten Positionsdaten die Position ($b_{UWB+BLE}$) des Transponders (201-203) zu ermitteln,
- wobei die Rechnereinheit ferner dafür ausgestaltet und eingerichtet ist, die ersten und zweiten Positionsdaten abhängig von der Varianz ($\sigma_1^2, \sigma_2^2$) des ersten und zweiten Lokalisierungsverfahrens zur Ermittlung der Position des Transponders zu gewichten.

15. Steuerungsprogramm zum Betrieb eines Ortungssystems, wobei das Steuerungsprogramm in einen Arbeitsspeicher eines Rechnereinheit ladbar ist und zumindest einen Codeabschnitt aufweist, bei dessen Ausführung

- ein erstes Lokalisierungsverfahren (6) zur Ermittlung erster Positionsdaten ($b_{UWB}$) angewendet wird,
- mittels eines zweiten Lokalisierungsverfahrens (7) zweite Positionsdaten ($b_{BLE}$) ermittelt werden, wobei das zweite Lokalisierungsverfahren im Vergleich zum ersten Lokalisierungsverfahren eine unterschiedliche Varianz in Bezug auf eine Position eines zu ortenden Objekts aufweist,
- durch Kombination (8) der ersten und zweiten Positionsdaten die Position ($b_{UWB+BLE}$) des Objekts (201-203) ermittelt wird,
- die ersten und zweiten Positionsdaten abhängig von der Varianz ($\sigma_1^2, \sigma_2^2$) des ersten und zweiten Lokalisierungsverfahrens zur Ermittlung der Position des Objekts gewichtet werden,

wenn das Steuerungsprogramm in der Rechnereinheit abläuft.

FIG 1

EP 4 528 310 A1

FIG 2

Europäisches Patentamt
European Patent Office
Office européen des brevets

# EUROPÄISCHER RECHERCHENBERICHT

Nummer der Anmeldung

EP 23 19 8530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/148004 A1 (NEXTNAV LLC [US]) 16. August 2018 (2018-08-16) * Seite 2, Absatz 14 – Seite 9, Absatz 43 * * Abbildungen 1-5 * * Zusammenfassung * ----- | 1-15 | INV. G01S5/02 |
| A | US 2022/137176 A1 (CISCO TECH INC [US]) 5. Mai 2022 (2022-05-05) * Seite 4, Absatz 44 – Seite 9, Absatz 150 * * Abbildungen 5-9 * * Zusammenfassung * ----- | 1-15 | |
| A | US 8 446 254 B2 (CARRICK JOHN C [US]; MAGUIRE YAEL G [US]; THINGMAGIC INC [US]) 21. Mai 2013 (2013-05-21) * Spalte 19, Zeile 46 – Spalte 23, Zeile 49 * * Abbildungen 8A, 8B * * Zusammenfassung * ----- | 1-15 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 5. März 2024 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 4 528 310 A1**

## ANHANG ZUM EUROPÄISCHEN RECHERCHENBERICHT
## ÜBER DIE EUROPÄISCHE PATENTANMELDUNG NR.

EP 23 19 8530

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2024

| Im Recherchenbericht angeführtes Patentdokument | Datum der Veröffentlichung | Mitglied(er) der Patentfamilie | Datum der Veröffentlichung |
|---|---|---|---|
| WO 2018148004 A1 | 16-08-2018 | US 2018224519 A1<br>WO 2018148004 A1 | 09-08-2018<br>16-08-2018 |
| US 2022137176 A1 | 05-05-2022 | KEINE | |
| US 8446254 B2 | 21-05-2013 | US 2010109844 A1<br>US 2010109903 A1 | 06-05-2010<br>06-05-2010 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3290948 B1
- EP 3338108 A1
- US 2013342391 A1